# EUROPEAN PATENT APPLICATION

(11) **EP 4 811 094 A1**
(43) Date of publication of application: **23.09.2026**
(21) Application number: 24891918.5
(22) Date of filing: 13.11.2024
(51) Int. Cl.: G06F 3/0482, G06F 16/26

(54) **DATA DISPLAY METHOD AND APPARATUS, ELECTRONIC DEVICE AND STORAGE MEDIUM**

(30) Priority: 15.11.2023 CN 202311527493
(71) Applicant: Lemon Inc., Grand Cayman, KY1-1205 (KY)
(72) Inventor: CHEN, Siyue, Beijing 100028 (CN); JIN, Yuanle, Beijing 100028 (CN); CHEN, Zhan, Beijing 100028 (CN); CHENG, Ming, Beijing 100028 (CN)
(74) Representative: Grünecker Patent- und Rechtsanwälte PartG mbB
(86) International application number: PCT/SG2024/050733
(87) International publication number: WO 2025/106015

(57) **Abstract**

Embodiments of the present disclosure disclose a data display method and apparatus, an electronic device, and a storage medium. The method includes: receiving a first viewing operation for a first item control in a current display component; displaying, according to the first viewing operation, the first item control differently from item controls in the current display component other than the first item control; acquiring sub-data included in first data of the first item control; creating a new display component, where the new display component is located on an upper layer of the current display component, and at least a portion of the first item control in the current display component is not occluded by the new display component; and loading the sub-data included in the first data into an item control of the new display component for display.

## Description

### CROSS-REFERENCE TO RELATED APPLICATION(S)

The present application claims priority to Chinese Patent Application No. 202311527493.X, filed on November 15, 2023 and titled "DATA DISPLAY METHOD AND APPARATUS, ELECTRONIC DEVICE AND STORAGE MEDIUM", the disclosure of which is incorporated herein by reference in its entirety.

### FIELD

Embodiments of the present disclosure relate to the field of computer technologies, and in particular, to a data display method and apparatus, an electronic device, and a storage medium.

### BACKGROUND

At present, multi-level data is usually displayed in the form of a tree structure list. In the case where the magnitude of the multi-level data is large, the tree structure list will be split into different pages for display, which will seriously affect the user's understanding of the data structure.

### SUMMARY

Embodiments of the present disclosure provide a data display method and apparatus, an electronic device, and a storage medium, which are able to clearly present a data structure of multi-level data.

In a first aspect, embodiments of the present disclosure provide a data display method, including: receiving a first viewing operation for a first item control in a current display component; displaying, according to the first viewing operation, the first item control differently from item controls in the current display component other than the first item control; acquiring sub-data included in first data of the first item control; creating a new display component, where the new display component is located on an upper layer of the current display component, and at least a portion of the first item control in the current display component is not occluded by the new display component; and loading the sub-data included in the first data into an item control of the new display component for display.

In a second aspect, embodiments of the present disclosure provide a data display apparatus, including: a receiving module, configured to receive a first viewing operation for a first item control in a current display component; a display module, configured to display, according to the first viewing operation, the first item control differently from item controls in the current display component other than the first item control; a data acquiring module, configured to acquire sub-data included in first data of the first item control; a creating module, configured to create a new display component, where the new display component is located on an upper layer of the current display component, and at least a portion of the first item control in the current display component is not occluded by the new display component; and a presentation module, configured to load the sub-data included in the first data into an item control of the new display component for display.

In a third aspect, embodiments of the present disclosure provide an electronic device, including: one or more processors; and a storage apparatus, configured to store one or more programs, when the one or more programs are executed by the one or more processors, the one or more processors are caused to implement the data display method according to any one of embodiments of the present disclosure.

In a fourth aspect, embodiments of the present disclosure provide a storage medium including computer-executable instructions, where when the computer-executable instructions are executed by a computer processor, the data display method according to any one of embodiments of the present disclosure is performed.

### BRIEF DESCRIPTION OF THE DRAWINGS

The above and other features, advantages, and aspects of embodiments of the present disclosure will become more apparent in combination with the drawings and with reference to the following specific implementations. Throughout the drawings, the same or similar reference numbers refer to the same or similar elements. It should be understood that the drawings are schematic and that the components and elements are not necessarily drawn to scale.
Fig. 1 is a schematic flowchart of a data display method according to embodiments of the present disclosure;
Fig. 2 is a schematic diagram of an interface in a data display method according to embodiments of the present disclosure;
Fig. 3 is a schematic diagram of an interface in a data display method according to embodiments of the present disclosure;
Fig. 4 is a schematic diagram of an interface in a data display method according to embodiments of the present disclosure;
Fig. 5 is a schematic diagram of an interface in a data display method according to embodiments of the present disclosure;
Fig. 6 is a schematic diagram of an interface in a data display method according to embodiments of the present disclosure;
Fig. 7 is a schematic diagram of an interface in a data display method according to embodiments of the present disclosure;
Fig. 8 is a schematic structural diagram of a data display apparatus according to embodiments of the present disclosure; and
Fig. 9 is a schematic structural diagram of an electronic device according to embodiments of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be understood that the various steps described in method implementations of the present disclosure may be performed in different orders and/or in parallel. Furthermore, the method implementations may include additional steps and/or omit the execution of the steps shown. The scope of the present disclosure is not limited in this regard.

As used herein, the term "include/comprise" and its variants are open-ended inclusions, i.e., "include/comprise but not limited to". The term "based on" is "at least partially based on". The term "one embodiment" means "at least one embodiment"; the term "another embodiment" means "at least one other embodiment"; and the term "some embodiments" means "at least some embodiments". Relevant definitions of other terms will be given in the following description.

It should be noted that concepts such as "first" and "second" mentioned in the present disclosure are only used to distinguish different apparatuses, modules, or units, and are not used to limit the order or interdependence of the functions performed by these apparatuses, modules, or units.

It should be noted that the modifiers "one" and "multiple" mentioned in the present disclosure are illustrative rather than restrictive, and those skilled in the art should understand that they should be understood as "one or multiple" unless otherwise clearly indicated in the context.

The names of messages or information exchanged between multiple apparatuses in the implementations of the present disclosure are only for illustrative purposes, and are not intended to limit the scope of these messages or information.

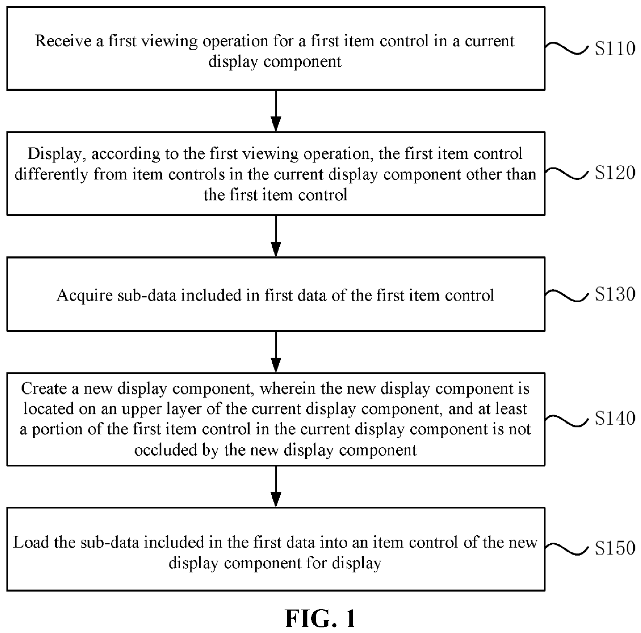

Fig. 1 is a schematic flowchart of a data display method according to embodiments of the present disclosure. The embodiments of the present disclosure are applicable to a case where multi-level data is presented, and are particularly applicable to a case where multi-level data with a large data magnitude is presented. The method may be performed by a data display apparatus, which may be implemented in forms of software and/or hardware, and may be configured in an electronic device, for example, in a computer.

As shown in Fig. 1, the data display method provided by the embodiments may include the following steps.

S110: a first viewing operation for a first item control is received in a current display component.

In the embodiments of the present disclosure, a display component belongs to a component that may be rendered on a page, and various controls (such as an item control, a button control, and the like) may be deployed therein. The display component may be reused, that is, when the display content in the display component is changed, there is no need to create a new page, which is beneficial to a quick switch of the content in the display component. In some implementations, the display component may include, for example, a floating layer component. The floating layer component has a high flexibility in creation position on a page, and may deploy various controls, and thus may be well applied to the case of multi-level data display in the embodiments of the present disclosure.

The current display component may be considered as an uppermost display component among display components in the page. The current display component may include at least one item control, and one piece of data may be loaded into each item control.

Each item control may be associated with a data operation control, and the data operation control may be understood as a control that operates on the data loaded in the item control. For example, an associated data operation control may be deployed at a tail end of the item control, and for another example, the item control may display at least one data operation control in response to a mouse hover operation, and the like. The data operation control may include, but is not limited to, a data viewing control; accordingly, a viewing operation may be received in response to a trigger of the viewing control. In addition, the viewing operation may also be received directly in response to the trigger of the item control, which is not specifically limited herein.

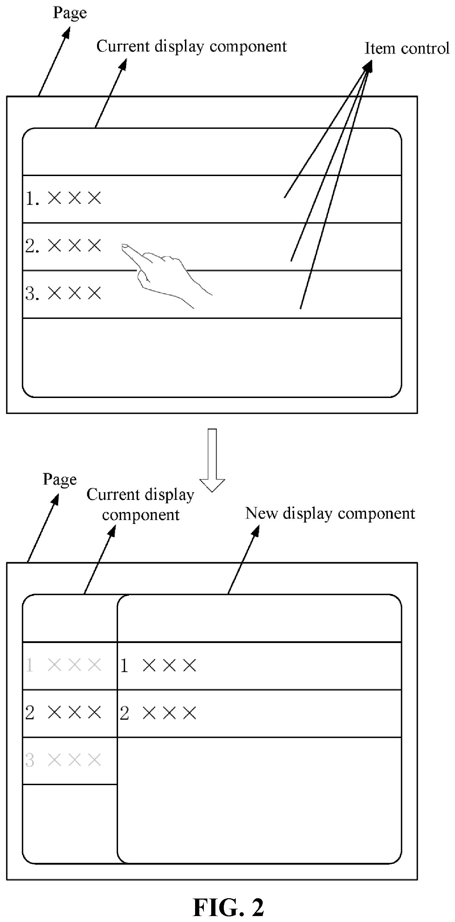

The viewing operation received in the current display component may be referred to as a first viewing operation, and the item control corresponding to the first viewing operation may be referred to as a first item control. Exemplarily, Fig. 2 is a schematic diagram of an interface in a data display method according to embodiments of the present disclosure. Referring to Fig. 2, a display component is rendered on the page, and the display component is located on an uppermost layer, and may be used as the current display component. The current display component includes three item controls, and in a case where an item control ranked second is triggered, a viewing operation for data of the item control ranked second may be received, the viewing operation may be referred to as the first viewing operation, and the item control (that is, the item control ranked second) corresponding to the first viewing operation may be referred to as the first item control.

In response to the first viewing operation, the following steps S120-S150 may be executed to view the sub-data of the first data loaded in the first item control.

S120: the first item control is displayed, according to the first viewing operation, differently from item controls in the current display component other than the first item control.

To highlight the first data to be currently viewed, the item control (that is, the first item control) that carries the first data may be displayed differently from other item controls in the current display component. Exemplarily, referring to Fig. 2 again, the first data of the first item control may be displayed in a first color, and data of other item controls may be displayed in a second color, where the first color is different from the second color. In addition, a color filled in the first item control may be different from colors filled in other item controls, which will not be listed one by one here.

S130: the sub-data included in first data is acquired in the first item control.

In the embodiments of the present disclosure, the sub-data included in the first data of the first item control may be acquired from a backend (such as a server) that supports interface data display. The sub-data may be considered as data at a next layer of the first data.

S140: a new display component is created, where the new display component is located on an upper layer of the current display component, and at least a portion of the first item control in the current display component is not occluded by the new display component.

The new display component may be created by an existing component creation method. The new display component may be set as the uppermost layer, that is, the new display component is located on the upper layer of the current display component. In the case where a width of the current display component is relatively small, the new display component may not be superimposed on the current display component; and in the case where the width of the current display component is relatively large, the new display component may be superimposed on the upper layer of the current display component.

In the case where the new display component is superimposed on the current display component, a size of the new display component needs to be set so that at least a portion of the first item control in the current display component is not occluded by the new display component. Therefore, the layer where the first data is located may be retained to clearly present a data hierarchy structure of the sub-data.

Referring to Fig. 2 again, the current display component and the new display component may be displayed side by side, and the new display component may have a same height as the current display component and be indented to the right by a certain size in width, so that information of the layer where the first data is located may be retained, to clearly present a hierarchy structure of the sub-data of the first data.

S150: the sub-data included in the first data is loaded into an item control of the new display component for display.

After the new display component is created, item controls whose number is consistent with the number of pieces of sub-data may also be created therein. In addition, the sub-data may be respectively loaded into each of the item controls of the new display component by an existing loading manner, so as to view the sub-data of the first data.

In a traditional solution, multi-level data is usually displayed in the form of a tree structure list. The tree structure list only supports page-turning viewing, and in most cases, the magnitude of assets is large. At this time, page-turning will split a complete tree structure into different pages, which affects the user's understanding and comparison of the structure of data assets.

In the embodiments of the present disclosure, because the current display component is the uppermost display component in the page, and the new display component is located on the upper layer of the current display component after being created, the new display component becomes the uppermost display component, that is, the new display component becomes the current display component. On the current display component, the data viewing operation may be further performed, so that data at different layers may be displayed in the page by superimposing the new display component, which may improve the flexibility of viewing perspectives of data assets and present the full picture of the data assets.

In the technical schemes of the embodiments of the present disclosure, the first viewing operation for the first item control in the current display component is received; the first item control is differently displayed, according to the first viewing operation, from the other item controls in the current display component other than the first item control; the sub-data included in the first data of the first item control is acquired; the new display component is created, where the new display component is located on the upper layer of the current display component, and at least a portion of the first item control in the current display component is not occluded by the new display component; and the sub-data included in the first data is loaded into the item control of the new display component for display. In the manner of superimposing the new display component on the upper layer to present the multi-level data and retaining partial information of the viewed item in the old display component, the data structure of the multi-level data may be clearly displayed, and the user viewing experience may be improved.

The embodiments of the present disclosure may be combined with various alternatives in the data display method provided in the above embodiments. In the data display method provided in the embodiments, the switching of data in the display component is described in detail, and the viewing data may be flexibly switched.

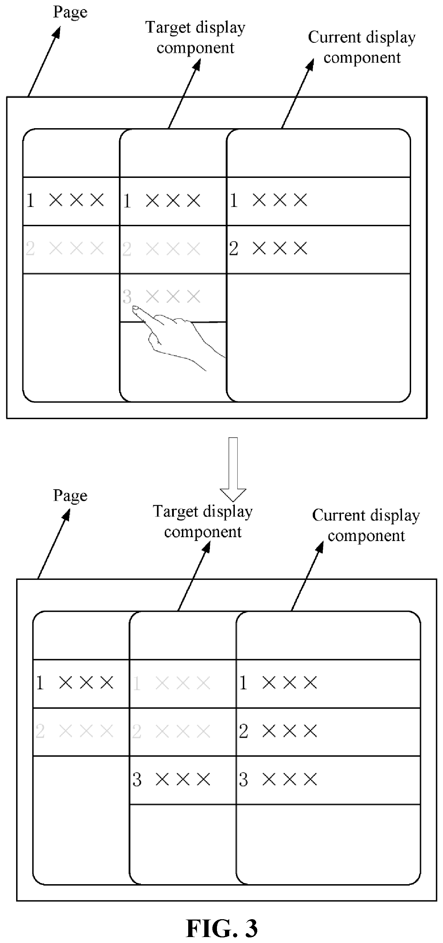

Exemplarily, Fig. 3 is a schematic diagram of an interface in a data display method according to embodiments of the present disclosure. As shown in Fig. 3, the data display method provided by the embodiments may include the following steps.

A second viewing operation for a second item control in a target display component is received, where the target display component is located below the current display component. The second item control is differently displayed, according to the second viewing operation, from other item controls in the target display component other than the second item control. Sub-data included in second data of the second item control is acquired. The sub-data included in the second data is loaded into an item control of an upper-layer display component of the target display component for display.

In the embodiments of the present disclosure, the target display component is located below the current display component, that is, data in the target display component is upper-layer data of the data in the current display component. The second item control in the target display component may be different from the item control where the data being viewed in the target display component is located. That is, through the second viewing operation, it is expected to view sub-data of data different from the data currently being viewed in the target display component.

Referring to Fig. 3, there are two display components in the lower layer of the current display component, and any one of the two display components may be used as the target display component. For example, in Fig. 3, a display component at a next layer of the current display component is used as the target display component. Data in an item control ranked first in the target display component is being viewed, that is, the data displayed by the current display component is sub-data of the data of the item control ranked first in the target display component. At this time, in the case where the target display component receives a viewing operation for an item control ranked third, the viewing operation may be referred to as the second viewing operation, the item control ranked third may be referred to as the second item control, and data of the item control ranked third may be referred to as the second data.

After the data being viewed in the target display component is switched to the data of the second item control, the second item control may be displayed differently from other item controls, to prompt that the viewed data in the target display component is switched. For the manner of differently displaying the second item control, the process of acquiring the sub-data included in the second data of the second item control, and the process of loading the sub-data included in the second data into the item control of the upper layer, reference may be made to the above, which will not be repeated here. Therefore, by switching the upper-layer data, the data content in the related display component may be quickly and flexibly switched.

Referring to Fig. 3 again, after the data being viewed in the target display component is switched from data of the item control ranked first to data of the item control ranked third, the item control ranked third may be displayed differently from other item controls (including the item control ranked first). The sub-data included in the data of the item control ranked third is acquired, and the sub-data is loaded into the current display component, to quickly and flexibly switch the data in the current display component.

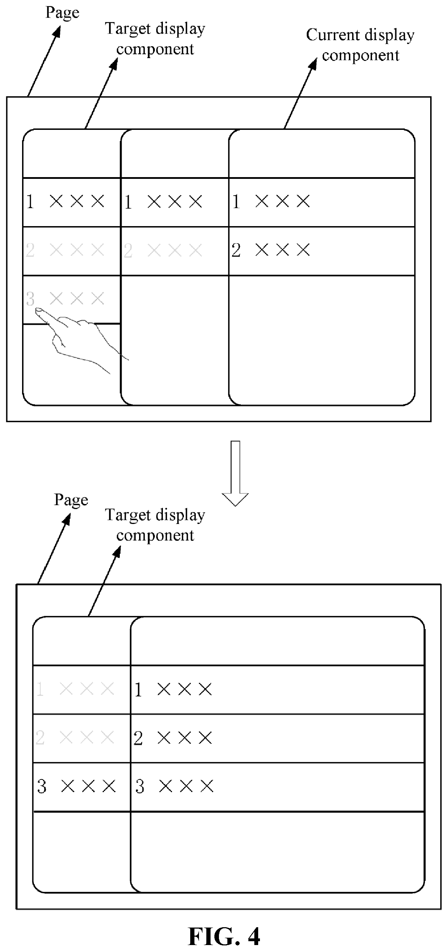

Exemplarily, Fig. 4 is a schematic diagram of an interface in a data display method according to embodiments of the present disclosure. As shown in Fig. 4, in some optional implementations, in the case where a display component is further included above an upper-layer display component of the target display component, the display component above the upper-layer display component of the target display component may be closed.

Referring to Fig. 4, there are two display components in the lower layer of the current display component, and a display component at a lower two layers of the current display component is used as the target display component. Data in an item control ranked first in the target display component is being viewed. At this time, in the case where the target display component receives a viewing operation for an item control ranked third, the viewing operation may be referred to as the second viewing operation, the item control ranked third may be referred to as the second item control, and data of the item control ranked third may be referred to as the second data. The item control ranked third may be displayed differently from other item controls (including the item control ranked first). The sub-data included in the data of the item control ranked third is acquired, and the sub-data is loaded into the display component at the next layer of the current display component, to switch the data in the display component at the next layer of the current display component. Because the viewing operation for the switched data in the display component at the next layer of the current display component is not received, the data to be displayed in the current display component has uncertainty, and thus the current display component may be closed.

In these optional implementations, in the case where the display component is further included above the upper-layer display component of the target display component, because the data in the upper-layer display component is switched, but the viewing operation for the switched data is not received, the data to be displayed in the display components at upper two layers and above has uncertainty, and thus all the display components at the upper two layers and above of the target display component may be closed, to implement flexible interaction between the display components.

In the technical schemes of the embodiments of the present disclosure, the switching of the data in the display component is described in detail, and the viewing data may be flexibly switched. The data display method provided in the embodiments of the present disclosure belongs to the same disclosure concept as the data display method provided in the above embodiments, and for the technical details not described in detail in the embodiments, reference may be made to the above embodiments, and the same technical features have the same beneficial effects in the embodiments and the above embodiments.

The embodiments of the present disclosure may be combined with various alternatives in the data display method provided in the above embodiments. In the data display method provided in the embodiments, a quick return to a required-layer display component is described in detail, and the required-layer display component may be quickly switched back to.

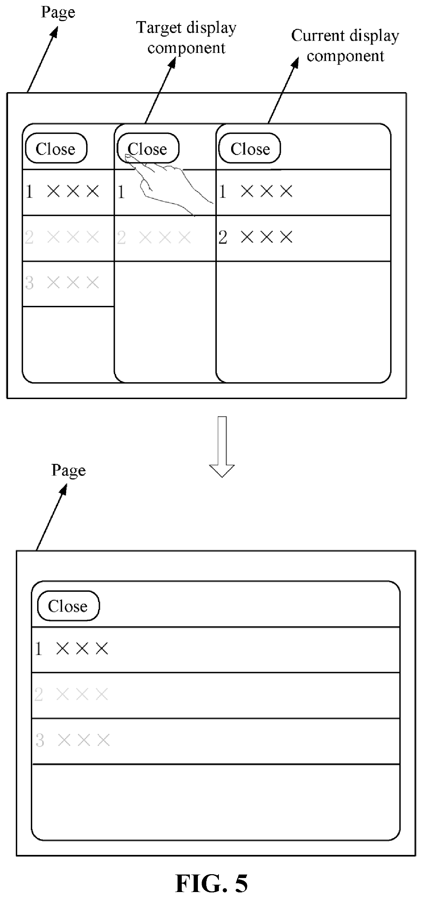

Fig. 5 is a schematic diagram of an interface in a data display method according to embodiments of the present disclosure. As shown in Fig. 5, the data display method provided by the embodiments may include the following steps.

A closing operation for a target display component is received, where the target display component is located below the current display component. The target display component and display components on an upper layer of the target display component are closed according to the closing operation.

In the embodiments of the present disclosure, the target display component is located below the current display component, and may be any one of the display components in the lower layer of the current display component. For example, in Fig. 5, a display component at a next layer of the current display component is used as the target display component. A component closing control may be deployed in the target display component, and the closing operation may be received when the component closing control is triggered. In response to the closing operation for the target display component, not only the target display component may be closed, but also all the display components in the upper layers of the target display component may be closed, and a display component at a next layer of the target display component becomes the current display component. Therefore, multiple display components may be closed by one operation, and the required-layer display component (that is, the display component at the next layer of the target display component) may be quickly switched back to, to improve the interaction flexibility of the display components.

In the technical schemes of the embodiments of the present disclosure, the quick return to the required-layer display component is described in detail, and the required-layer display component may be quickly switched back to. The data display method provided in the embodiments of the present disclosure belongs to the same disclosure concept as the data display method provided in the above embodiments, and for the technical details not described in detail in the embodiments, reference may be made to the above embodiments, and the same technical features have the same beneficial effects in the embodiments and the above embodiments.

The embodiments of the present disclosure may be combined with various alternatives in the data display method provided in the above embodiments. In the data display method provided in the embodiments, stretching of a display component is described in detail, which may improve the user's viewing experience.

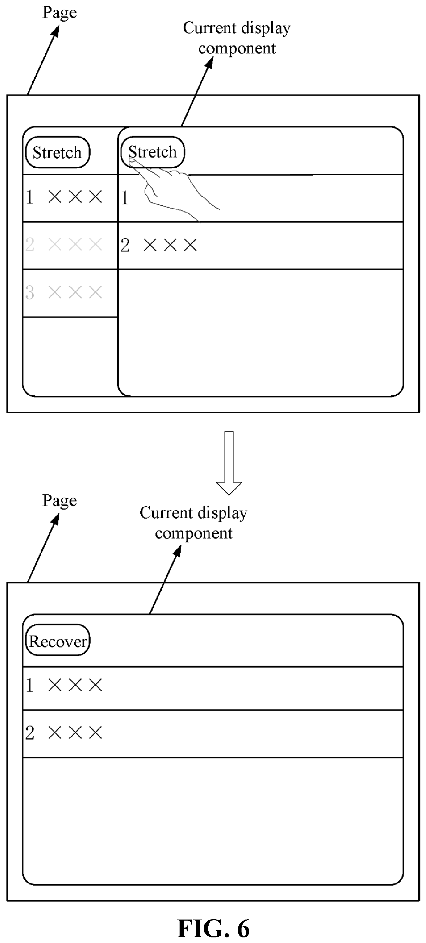

Fig. 6 is a schematic diagram of an interface in a data display method according to embodiments of the present disclosure. As shown in Fig. 6, the data display method provided by the embodiments may include the following step.

The current display component is stretched in response to a stretching operation for the current display component, to cover a display component on located below.

Referring to Fig. 6, a component stretching control may be deployed in the current display component, and the stretching operation may be received when the component stretching control is triggered. In response to the stretching operation, the current display component may be stretched to achieve the "full screen" effect of occluding all the display components located below, thereby improving the user's viewing experience. Under this effect, the viewing operation for the first data may be performed.

In some implementations, any one of all the display components in the page may be stretched, so that the display component being stretched covers all the display components located below, and the upper-layer display component of the display component being stretched may be retained, so that a portion of data structure that the user focuses on may be displayed, and the user viewing experience may be further improved.

In addition, referring to Fig. 6 again, the original stretching control in the stretched display component may be switched to a recovery control. In response to a trigger of the recovery control, the stretched display component may be recovered to the state before stretching.

In the technical schemes of the embodiments of the present disclosure, the stretching of the display component is described in detail, which may improve the user's viewing experience. The data display method provided in the embodiments of the present disclosure belongs to the same disclosure concept as the data display method provided in the above embodiments, and for the technical details not described in detail in the embodiments, reference may be made to the above embodiments, and the same technical features have the same beneficial effects in the embodiments and the above embodiments.

The embodiments of the present disclosure may be combined with various alternatives in the data display method provided in the above embodiments. In the data display method provided in the embodiments, switching a data viewing manner is described in detail, a data structure of any piece of data in the current display component may be displayed in a tree structure, multi-dimensional viewing of the data structure is realized, and the data viewing manner is enriched.

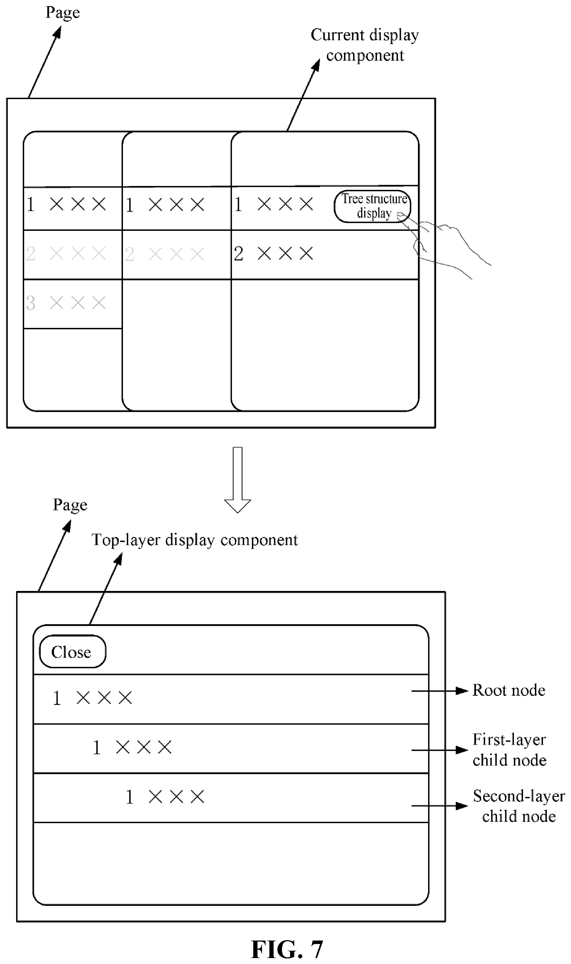

Fig. 7 is a schematic diagram of an interface in a data display method according to embodiments of the present disclosure. As shown in Fig. 7, the data display method provided by the embodiments may include the following steps.

A tree structure display operation for the first item control in the current display component is received. Third data of item controls which are differently displayed in each of display components below the current display component is determined according to the tree structure display operation. A top-layer display component is created, where the top-layer display component is located on a top layer and covers the display components on the lower layers. The first data of the first item control and the third data are loaded into a tree display control in the top-layer display component according to an inclusion relationship for display.

The data operation control associated with each item control may further include a tree structure display control. Accordingly, a tree structure display operation may be received in response to a trigger of the tree structure display control. At this time, an item corresponding to the tree structure display operation may also be referred to as the first item control.

In response to the tree structure display operation, the third data of the items which are differently displayed may be determined from the data in the each of display components below the current display component, so that upper-layer node data of the data in the current display component may be determined.

The top-layer display component may be created by an existing component creation method, and the top-layer display component may be located on the top layer of the display component and may cover all the lower-layer display components to achieve the "full screen" effect. After the top-layer display component is created, the tree display control may be created in the top-layer display component. The tree display control may include at least one control capable of loading data, and the at least one control may form a tree structure. The first data loaded in the first item control and the upper-layer node data (that is, the third data) may be loaded into each node position of the tree structure control according to the inclusion relationship.

Exemplarily, referring to Fig. 7, a tree structure display operation is received by an item control ranked first in the current display component. An item control ranked first in a display component at a next layer of the current display component and an item control ranked first in a display component at a lower two layers are item controls which are differently displayed, and data of the two item controls may be determined as third data.

In Fig. 7, the third data corresponding to the display component at the lower two layers may be considered as data of a root node in the tree structure, and it includes the third data corresponding to the display component at the next layer, and thus the third data corresponding to the display component at the next layer may be used as first-layer child node data of the root node. The third data corresponding to the display component at the next layer includes the first data, and thus the first data may be used as second-layer child node data of the root node. Furthermore, the third data and the first data may be loaded into the tree structure control according to the corresponding root node and the child nodes at different layers.

In addition, a closing control may also be deployed in the top-layer display component to receive a closing operation for the top-layer display component. Furthermore, in response to the closing operation, the top-layer display component may be closed, that is, each layer of display component covered by the top-layer display component may be displayed, so that the original side-by-side display manner of the data structure may be restored.

In the traditional solution, the structures of the tree structure list and the flat view are separated, and the user cannot obtain the full picture of a fine-grained data asset under any one perspective, and usually needs to query the same data asset twice under different perspectives to view the complete asset structure by comparison. At the same time, the tree list view includes all data assets, and the user is easy to lose track of a hierarchy due to page-turning, and the page calculation amount will also be large, which affects the page performance.

In the embodiments of the present disclosure, the data viewing manner may be switched from the display by multiple display components to the tree structure display in one display component, which supports multi-dimensional viewing of the data structure and enriches the data viewing manner. In addition, by filtering data not being viewed in the upper-layer data of the first data and only acquiring data being viewed in the upper-layer data (that is, the third data), invalid nodes may be hidden during the tree structure display process, and the calculation amount in the component may be reduced.

In the technical schemes of the embodiments of the present disclosure, switching the data viewing manner is described in detail, the data structure of any piece of data in the current display component may be displayed in a tree structure, multi-dimensional viewing of the data structure is realized, and the data viewing manner is enriched. The data display method provided in the embodiments of the present disclosure belongs to the same disclosure concept as the data display method provided in the above embodiments, and for the technical details not described in detail in the embodiments, reference may be made to the above embodiments, and the same technical features have the same beneficial effects in the embodiments and the above embodiments.

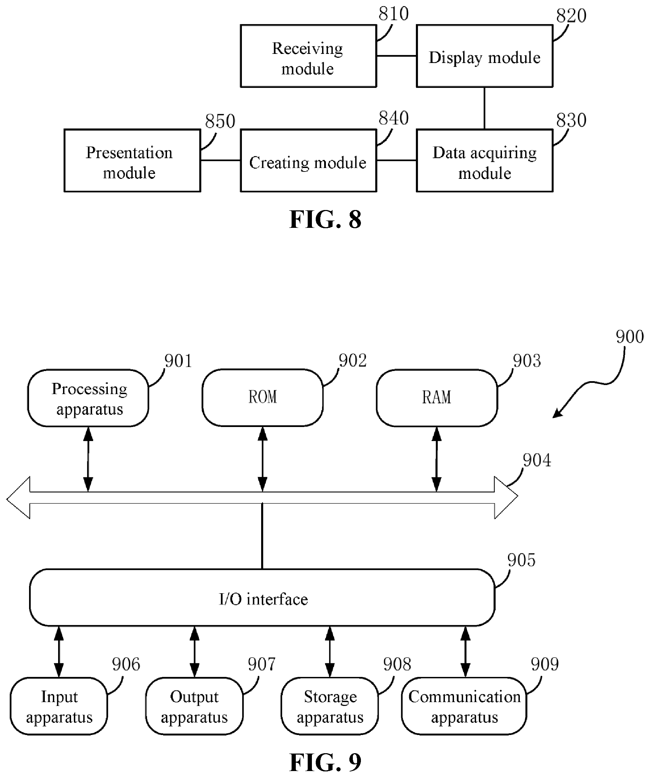

Fig. 8 is a schematic diagram of a structure of a data display apparatus according to embodiments of the present disclosure. The data display apparatus provided in the embodiments is applicable to a case where multi-level data is displayed, and is particularly applicable to a case where multi-level data with a large data magnitude is displayed.

As shown in Fig. 8, the data display apparatus provided by the embodiments of the present disclosure may include a receiving module 810, a display module 820, a data acquiring module 830, a creating module 840, and a presentation module 850.

The receiving module 810 is configured to receive a first viewing operation for a first item control in a current display component.

The display module 820 is configured to display, according to the first viewing operation, the first item control differently from item controls in the current display component other than the first item control.

The data acquiring module 830 is configured to acquire sub-data included in first data of the first item control.

The creating module 840 is configured to create a new display component, where the new display component is located on an upper layer of the current display component, and at least a portion of the first item control in the current display component is not occluded by the new display component.

The presentation module 850 is configured to load the sub-data included in the first data into an item control of the new display component for display.

In some optional implementations, the receiving module may be further configured to receive a second viewing operation for a second item control in a target display component, where the target display component is located below the current display component.

Accordingly, the display module may be configured to display, according to the second viewing operation, the second item control differently from item controls in the target display component other than the second item control.

The data acquiring module may be configured to acquire sub-data included in second data of the second item control.

The presentation module may be configured to load the sub-data included in the second data into an item control of an upper-layer display component of the target display component for display.

In some optional implementations, the data display apparatus may further include a closing module.

The closing module may be configured to close a display component above an upper-layer display component of the target display component if the display component is further included above the upper-layer display component of the target display component.

In some optional implementations, the closing module may be further configured to:
receive a closing operation for the target display component, and
close the target display component and display components on an upper layer of the target display component according to the closing operation.

In some optional implementations, the data display apparatus may further include a stretching module.

The stretching module may be configured to stretch the current display component in response to a stretching operation for the current display component, to cover a display component on located below.

In some optional implementations, the receiving module may be further configured to receive a tree structure display operation for the first item control in the current display component.

Accordingly, the data acquiring module may be further configured to determine, according to the tree structure display operation, third data of item controls which are differently displayed in each of display components below the current display component.

The creating module may be configured to create a top-layer display component, where the top-layer display component is located on a top layer and occludes the display components on the lower layers.

The presentation module may be configured to load the first data of the first item control and the third data into a tree display control in the top-layer display component according to an inclusion relationship for display.

In some optional implementations, the display component includes a floating layer component.

The data display apparatus provided by the embodiments of the present disclosure may perform the data display method provided by any embodiment of the present disclosure, and has corresponding functional modules and beneficial effects for performing the method.

It is worth noting that the units and modules included in the above apparatus are only divided according to functional logic, but are not limited to the above division, as long as the corresponding functions may be realized. In addition, the specific names of the functional units are only for the convenience of distinguishing from each other, and are not used to limit the protection scope of the embodiments of the present disclosure.

Reference is made to Fig. 9 below, which illustrates a schematic diagram of a structure of an electronic device (such as a terminal device or a server in Fig. 9) 900 suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable multimedia player (PMP), and an in-vehicle terminal (such as an in-vehicle navigation terminal), and fixed terminals such as a digital TV and a desktop computer. The electronic device shown in Fig. 9 is only an example, and should not impose any limitation to the function and scope of use of the embodiments of the present disclosure.

As shown in Fig. 9, the electronic device 900 may include a processing apparatus (such as a central processing unit and a graphics processor) 901, which may perform various appropriate actions and processing according to a program stored in a read-only memory (ROM) 902 or a program loaded from a storage apparatus 908 into a random access memory (RAM) 903. The RAM 903 further stores various programs and data required for operations of the electronic device 900. The processing apparatus 901, the ROM 902, and the RAM 903 are interconnected by means of a bus 904. An input/output (I/O) interface 905 is also connected to the bus 904.

Usually, the following apparatuses may be connected to the I/O interface 905: an input apparatus 906 including, for example, a touch screen, a touchpad, a keyboard, a mouse, a camera, a microphone, an accelerometer, and a gyroscope; an output apparatus 907 including, for example, a liquid crystal display (LCD), a speaker, and a vibrator; the storage apparatus 908 including, for example, a magnetic tape and a hard disk; and a communication apparatus 909. The communication apparatus 909 may allow the electronic device 900 to perform wireless or wired communication with other devices to exchange data. Although Fig. 9 shows the electronic device 900 having various apparatuses, it should be understood that not all the apparatuses shown herein need to be implemented or provided. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program codes for performing the method shown in the flowchart. In such an embodiment, the computer program may be downloaded and installed from a network via the communication apparatus 909, or installed from the storage apparatus 908, or installed from the ROM 902. When the computer program is executed by the processing apparatus 901, the above-mentioned functions defined in the data display method of the embodiments of the present disclosure are executed.

The electronic device provided by the embodiments of the present disclosure belongs to the same disclosure concept as the data display method provided by the above embodiments, and for the technical details not described in detail in the embodiments, reference may be made to the above embodiments, and the embodiments have the same beneficial effects as the above embodiments.

The embodiments of the present disclosure provide a computer storage medium having a computer program stored thereon, where when the program is executed by a processor, the data display method provided by the above embodiments is implemented.

It should be noted that the above-mentioned computer-readable medium in the present disclosure may be a computer-readable signal medium, a computer-readable storage medium, or any combination of the two. The computer-readable storage medium may be, for example, but not limited to, an electrical, magnetic, optical, electromagnetic, infrared, or semi-conductive system, apparatus, or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) or a flash memory (FLASH), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, which may be used by or in combination with an instruction execution system, apparatus, or device. In the present disclosure, the computer-readable signal medium may include a data signal propagated in a baseband or as a part of a carrier, and computer-readable program codes are carried therein. This propagated data signal may take multiple forms, including but not limited to an electromagnetic signal, an optical signal, or any suitable combination of the above. The computer-readable signal medium may also be any computer-readable medium other than the computer-readable storage medium, and the computer-readable signal medium may send, propagate, or transmit the program for use by or in combination with the instruction execution system, apparatus, or device. The program codes contained on the computer-readable medium may be transmitted in any suitable medium, including but not limited to: a wire, an optical cable, a radio frequency (RF), or any suitable combination of the above.

In some implementations, the client and the server may communicate using any currently known or future developed network protocol, such as the hypertext transfer protocol (HTTP), and may be interconnected with any form or medium of digital data communication (for example, a communication network). Examples of the communication network include a local area network ("LAN"), a wide area network ("WAN"), an internet (for example, the Internet), a peer-to-peer network (for example, an Ad-Hoc network), and any network currently known or to be developed in the future.

The above computer-readable medium may be included in the above electronic device, or may exist alone without being assembled into the electronic device.

The above computer-readable medium carries one or more programs, and when the one or more programs are executed by the electronic device, the electronic device:
receives a first viewing operation for a first item control in a current display component; displays, according to the first viewing operation, the first item control differently from item controls in the current display component other than the first item control; acquires sub-data included in first data of the first item control; creates a new display component, where the new display component is located on an upper layer of the current display component, and at least a portion of the first item control in the current display component is not occluded by the new display component; and loads the sub-data included in the first data into an item control of the new display component for display.

The computer program codes for performing the operations of the present disclosure may be written in one or more programming languages or a combination thereof, where the programming languages include, but are not limited to, object-oriented programming languages such as Java, Smalltalk, and C++, and may also include conventional procedural programming languages such as "C" language or similar programming languages. The program codes may be completely executed on a user computer, partially executed on a user computer, executed as an independent software package, partially executed on a user computer and partially executed on a remote computer, or completely executed on a remote computer or server. In the case involving the remote computer, the remote computer may be connected to the user computer through any kind of network, including a local area network (LAN) or a wide area network (WAN), or may be connected to an external computer (for example, connected via the Internet using an Internet service provider).

The flowcharts and block diagrams in the drawings illustrate the possibly implemented architectures, functions, and operations of the system, method, and computer program product according to various embodiments of the present disclosure. In this regard, each block in the flowchart or block diagram may represent a module, program segment, or part of code, which contains one or more executable instructions for implementing the specified logical functions. It should also be noted that, in some alternative implementations, the functions marked in the block may also occur in an order different from that marked in the drawings. For example, two blocks shown in succession may actually be executed substantially in parallel, or they may sometimes be executed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented in a software manner, and may also be implemented in a hardware manner. Among them, the names of the units and modules do not constitute a limitation on the units and modules themselves under certain circumstances.

The functions described above herein may be at least partially performed by one or more hardware logic components. For example, without limitation, exemplary types of hardware logic components that may be used include: a field programmable gate array (Field Programmable Gate Array, FPGA), an application specific integrated circuit (Application Specific Integrated Circuit, ASIC), an application specific standard parts (Application Specific Standard Parts, ASSP), a system on chip (System on Chip, SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electrical, magnetic, optical, electromagnetic, infrared, or semi-conductive system, apparatus, or device, or any suitable combination of the above. More specific examples of the machine-readable storage medium may include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

According to one or more embodiments of the present disclosure, a data display method is provided, which includes the following steps.

A first viewing operation for a first item control in a current display component is received.

The first item control is differently displayed, according to the first viewing operation, from other item controls in the current display component other than the first item control.

Sub-data included in first data of the first item control is acquired.

A new display component is created, where the new display component is located on an upper layer of the current display component, and at least a portion of the first item control in the current display component is not occluded by the new display component.

The sub-data included in the first data is loaded into an item control of the new display component for display.

According to one or more embodiments of the present disclosure, a data display method is provided, which further includes the following steps.

In some optional implementations, a second viewing operation for a second item control in a target display component is received, where the target display component is located below the current display component.

The second item control is differently displayed, according to the second viewing operation, from other item controls in the target display component other than the second item control.

Sub-data included in second data of the second item control is acquired.

The sub-data included in the second data is loaded into an item control of an upper-layer display component of the target display component for display.

According to one or more embodiments of the present disclosure, a data display method is provided, which further includes the following steps.

In some optional implementations, if a display component is further included above the upper-layer display component of the target display component, the display component above the upper-layer display component of the target display component is closed.

According to one or more embodiments of the present disclosure, a data display method is provided, which further includes the following steps.

In some optional implementations, a closing operation for the target display component is received, where the target display component is located below the current display component.

The target display component and display components on an upper layer of the target display component are closed according to the closing operation.

According to one or more embodiments of the present disclosure, a data display method is provided, which further includes the following steps.

In some optional implementations, the current display component is stretched in response to a stretching operation for the current display component, to cover a display component on located below.

According to one or more embodiments of the present disclosure, a data display method is provided, which further includes the following steps.

In some optional implementations, a tree structure display operation for the first item control in the current display component is received.

Third data of item controls which are differently displayed in each of display components below the current display component is determined according to the tree structure display operation.

A top-layer display component is created, where the top-layer display component is located on a top layer and covers the display components on the lower layer.

The first data of the first item control and the third data are loaded into a tree display control in the top-layer display component according to an inclusion relationship for display.

According to one or more embodiments of the present disclosure, a data display method is provided, which further includes the following steps.

In some optional implementations, the display component includes a floating layer component.

According to one or more embodiments of the present disclosure, a data display apparatus is provided, which includes:
a receiving module, configured to receive a first viewing operation for a first item control in a current display component;
a display module, configured to differently display, according to the first viewing operation, the first item control from other item controls in the current display component other than the first item control;
a data acquiring module, configured to acquire sub-data included in first data of the first item control;
a creating module, configured to create a new display component, where the new display component is located on an upper layer of the current display component, and at least a portion of the first item control in the current display component is not occluded by the new display component; and
a presentation module, configured to load the sub-data included in the first data into an item control of the new display component for display.

The above description is merely illustration of preferred embodiments of the present disclosure and applied technical principles. Those skilled in the art should understand that the disclosure scope involved in the present disclosure is not limited to the technical solutions formed by the specific combination of the above technical features, and should also cover other technical solutions formed by any combination of the above technical features or their equivalent features without departing from the above disclosure concept. For example, the above features and the technical features provided in the present disclosure (but not limited to) with similar functions may be replaced each other to form a technical solution.

In addition, although the operations are depicted in a specific order, this should not be understood as requiring the operations to be performed in the specific order shown or in a sequential order. Under certain circumstances, multitasking and parallel processing may be advantageous. Likewise, although several specific implementation details are included in the above discussion, these should not be construed as limiting the scope of the present disclosure. Certain features described in the context of separate embodiments may also be implemented in a single embodiment in combination. Conversely, various features described in the context of a single embodiment may also be implemented in multiple embodiments individually or in any suitable subcombination.

Although the subject matter has been described in language specific to structural features and/or logical actions of the method, it should be understood that the subject matter defined in the appended claims is not necessarily limited to the specific features or actions described above. On the contrary, the specific features and actions described above are merely exemplary forms for implementing the claims.

## Claims

1. A data display method, comprising:
receiving a first viewing operation for a first item control in a current display component;
displaying, according to the first viewing operation, the first item control differently from item controls in the current display component other than the first item control;
acquiring sub-data included in first data of the first item control;
creating a new display component, wherein the new display component is located on an upper layer of the current display component, and at least a portion of the first item control in the current display component is not occluded by the new display component; and
loading the sub-data included in the first data into an item control of the new display component for display.

2. The method of claim 1, further comprising:
receiving a second viewing operation for a second item control in a target display component, wherein the target display component is located below the current display component;
displaying, according to the second viewing operation, the second item control differently from other item controls in the target display component;
acquiring sub-data included in second data of the second item control; and
loading the sub-data included in the second data into an item control of an upper-layer display component of the target display component for display.

3. The method of claim 2, further comprising:
if a display component is displayed above the upper-layer display component of the target display component, closing the display component above the upper-layer display component of the target display component.

4. The method of claim 1, further comprising:
receiving a closing operation for a target display component, wherein the target display component is located below the current display component; and
closing, according to the closing operation, the target display component and a display component on an upper layer of the target display component.

5. The method of claim 1, further comprising:
stretching, in response to a stretching operation for the current display component, the current display component to cover a display component located below.

6. The method of claim 1, further comprising:
receiving a tree structure display operation for the first item control in the current display component;
determining, according to the tree structure display operation, third data of item controls that are differently displayed in each of display components below the current display component;
creating a top-layer display component, wherein the top-layer display component is located on a top layer and covers the display components located below; and
loading, according to an inclusion relationship, the first data of the first item control and the respective third data into a tree presentation control in the top-layer display component for display.

7. The method of any of claims 1 to 6, wherein the display component comprises a floating layer component.

8. A data display apparatus, comprising:
a receiving module configured to receive a first viewing operation for a first item control in a current display component;
a display module configured to display, according to the first viewing operation, the first item control differently from item controls in the current display component other than the first item control;
a data acquiring module configured to acquire sub-data included in first data of the first item control;
a creating module configured to create a new display component, wherein the new display component is located on an upper layer of the current display component, and at least a portion of the first item control in the current display component is not occluded by the new display component; and
a presentation module configured to load the sub-data included in the first data into an item control of the new display component for display.

9. An electronic device, comprising:
one or more processors; and
a storage apparatus, configured to store one or more programs,
wherein the one or more programs, when executed by the one or more processors, cause the one or more processors to implement the data display method of any of claims 1 to 7.

10. A storage medium comprising computer-executable instructions, wherein the computer-executable instructions, when executed by a computer processor, are used to perform the data display method of any of claims 1 to 7.
